(19) Europäisches Patentamt
European Patent Office
Office européen des brevets

(11) **EP 4 056 047 B1**

(12) **EUROPEAN PATENT SPECIFICATION**

(45) Date of publication and mention
of the grant of the patent:
**04.12.2024 Bulletin 2024/49**

(21) Application number: **20883727.8**

(22) Date of filing: **23.10.2020**

(51) International Patent Classification (IPC):
***A23L 5/00*** *(2016.01)* ***A23L 33/105*** *(2016.01)*

(52) Cooperative Patent Classification (CPC):
**A23L 33/105; A23L 29/212; A23L 29/262;
A23L 29/37; A23P 10/20; A23P 10/25**

(86) International application number:
**PCT/JP2020/039875**

(87) International publication number:
**WO 2021/090707 (14.05.2021 Gazette 2021/19)**

(54) **GRANULAR COMPOSITION**

GRANULÄRE ZUSAMMENSETZUNG

COMPOSITION GRANULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2019 JP 2019200805**

(43) Date of publication of application:
**14.09.2022 Bulletin 2022/37**

(73) Proprietor: **Kao Corporation
Tokyo 103-8210 (JP)**

(72) Inventor: **ISHI, Kotaro
Tokyo 131-8501 (JP)**

(74) Representative: **Hoffmann Eitle
Patent- und Rechtsanwälte PartmbB
Arabellastraße 30
81925 München (DE)**

(56) References cited:
**JP-A- 2017 178 830     JP-A- 2018 061 483
JP-A- 2018 061 483**

**Description**

Field of the Invention

The present invention relates to a granular composition.

Background of the Invention

Recently, various materials having physiological functions have been proposed, and health beverages and foods containing these materials have been widely put on the market. A plant extract is known as one of such materials having physiological functions. Many products are supplied as a granular type containing plant extract for oral ingestion so as to enable everyday, continuous, and simple ingestion.

With regard to such granular composition having blended therein the plant extract, for example, there is a report that granules capable of instantly dissolving in the mouth are obtained by subjecting a powder mixture containing the plant extract to extrusion granulation with a water content therein controlled in a specific range (Patent Document 1). However, no investigation has been made into increasing a concentration of the plant extract. JP 2017 178830 A relates to a granule, containing 70 mass% of bilberry extract, using granulated particles composed of a bilberry extract powder and hydroxypropyl cellulose as a core substance, and having an outer layer which is a shellac layer, and a method for producing the granule comprising the following steps: (1) a step of granulating the bilberry extract from a mixture of the bilberry extract powder and a fluidizing agent with a fluidized bed granulating dryer using an aqueous solution of hydroxypropyl cellulose as a spraying liquid; (2) a step of coating the granulated particles obtained in the step (1) as the core substance with the fluidized bed granulating dryer using a solution in which shellac is dissolved as the spraying liquid.

Patent Document

[Patent Document 1] JP-A-2018-61483

Summary of the Invention

According to one embodiment of the present invention, there is provided a granular composition, comprising the following components (A), (B), (C), and (D):

(A) 20 mass% to 70 mass% of a plant extract;
(B) 3 mass% or more of dextrin;
(C) 5 mass% or more of a sugar alcohol; and
(D) from 0.2 mass% to 5 mass% of one or more of a cellulose derivative selected from the group consisting of hydroxypropyl methylcellulose and hydroxypropyl cellulose and salts thereof.

In addition, according to one embodiment of the present invention, there is provided a method for producing a granular composition, comprising the following steps (1) to (4):

(1) a step of mixing the following components (A), (B), (C), and (D):

(A) 20 mass% to 70 mass% of a plant extract;
(B) 3 mass% or more of dextrin;
(C) 5 mass% or more of a sugar alcohol; and
(D) from 0.2 mass% to 5 mass% of one or more of a cellulose derivative selected from the group consisting of hydroxypropyl methylcellulose and hydroxypropyl cellulose and salts thereof;

(2) a step of adding an aqueous medium to the mixture after the step (1), followed by kneading;
(3) a step of granulating the kneaded product after the step (2); and
(4) a step of drying the granulated product after the step (3) to obtain a granular composition.

Detailed Description of the Invention

The inventor of the present invention tried forming granules using a plant extract with reference to a known formulation. As a result, it was found that, when the blending amount of the plant extract was small, the granules needed to be ingested in a large amount at one time in order for a physiologically functional substance to be ingested in an effective amount, and hence were difficult to be ingested, thereby being liable to cause an obstacle to daily and continuous ingestion. In view of this, when the concentration of the plant extract was increased in order to ameliorate the difficulty in ingestion, there arose a problem that a granulation load was too large to allow formation into granules. As just described, the plant extract, which is generally viscous, has an inherent problem of being liable to cause a load at the time of granulation, thereby being difficult to form into granules.

The present invention relates to a granular composition having a good granulation property despite containing a plant extract, which is difficult to form into granules, at a high concentration.

The inventor of the present invention made extensive investigations in view of the above-mentioned problem. As a result, it found that a quick-soluble granular composition that can be formed into granules despite containing a plant extract at a high concentration, and is capable of instantly dissolving in the mouth, is obtained by incorporating dextrin, a sugar alcohol, and one or more of a cellulose derivative selected from the group consisting of hydroxypropyl methylcellulose and hydroxypropyl cellulose and salts thereof into a high-concentration plant extract. Thus, the present invention was completed.

According to the present invention, there can be provided a granular composition that has a good granulation property despite containing a plant extract, which is difficult to form into granules, at a high concentration, and that is capable of instantly dissolving in the mouth. In addition, the granular composition of the present invention, when orally ingested, can significantly reduce an ingestion amount at one time, and can be simply ingested without water. Accordingly, the granular composition hardly causes an obstacle to daily and continuous ingestion, and hence can be expected to improve medication adherence.

<Granular Composition>

The granular composition of the present invention is solid at ordinary temperature (20°C ± 15°C), and its form is granular. As used herein, the term "granular" refers to a granulated product whose particle size falls in the range of from 0.5 mm to 2.0 mm in terms of median diameter, and the term "median diameter" refers to a particle size corresponding to a frequency of 50% in a cumulative distribution on a volume basis (D50). A particle size distribution may be measured using a dynamic light-scattering particle size distribution-measuring apparatus, and specifically, may be measured by a method described in Examples to be described later.

The water content in the granular composition of the present invention is generally 5 mass% or less, preferably 4 mass% or less.

The "granular composition" of the present invention is preferably applied to oral ingestion.

[(A) Plant Extract]

The granular composition of the present invention comprises a plant extract as a component (A).

As used herein, the term "plant extract" refers to a product extracted from part or the whole of a plant. A method for the extraction is not particularly limited, and a known extraction method may be adopted. For example, an extraction method using a solvent, such as water, hot water, a hydrophilic organic solvent, or a mixture of water and a hydrophilic organic solvent, or a solvent-free extraction method such as squeezing may be adopted. The extract from the plant may be subjected to, for example, filtration, purification, and drying as required.

The component (A) is not particularly limited as long as the component (A) is an extract of an edible plant, but examples thereof may include extracts of coffee beans, tea, rosemary, asparagus, turmeric, zedoary, soybeans, cacao, long pepper, and ginkgo leaves. In addition, the plant extract may be subjected to known degradation treatment (e.g., degradation treatment with heat or pressure, degradation treatment with an acid or an alkali, or degradation treatment with an enzyme) before use. The components (A) may be used alone or in combination thereof.

The coffee beans may be roasted coffee beans or green coffee beans.

Examples of the tea include tea leaves (*Camellia sinensis*) selected from the group consisting of *C. sinensis.* var. *sinensis* (including the Yabukita variety), *C. sinensis.* var. *assamica,* and hybrids thereof.

The tea leaves may be classified into unfermented tea, semi-fermented tea, and fermented tea in accordance with their processing methods. The tea leaves may be used alone or in combination thereof. The tea variety and harvest season of the tea leaves are not particularly limited, and the tea leaves may be subjected to firing processing. Examples of the unfermented tea include leaves of green teas, such as sencha, fukamushi sencha, hojicha, bancha, gyokuro, kabusecha, tencha, kamairicha, kukicha, bocha, and mecha. In addition, examples of the semi-fermented tea include leaves of oolong teas, such as tekkannon, shikishu, ogonkei, and buigancha. Further, examples of the fermented tea include leaves of black teas, such as Darjeeling, Assam, and Sri Lanka.

Of those, an extract of one or more kinds of plants selected from the group consisting of: coffee beans; tea; and rosemary is preferred from the standpoint that the effect of the present invention is easily obtained.

The content of the component (A) in the granular composition of the present invention is from 20 mass% to 70 mass%, and from the viewpoints of taste and flavor and physiological effects it is preferably 30 mass% or more, more preferably 35 mass% or more, even more preferably 40 mass% or more, and from the viewpoint of the granulation property it is preferably 65 mass% or less, more preferably 60 mass% or less, . Such content of the component (A) in the granular composition of the present invention falls in the range of preferably from 30 mass% to 65 mass%, more preferably from 35 mass% to 60 mass%, even more preferably from 40 mass% to 60 mass%. Herein, the content of each of the components (A) to (D) is the solids of the component with respect to the granular composition. As used herein, the term "solids" refers to the mass of a residue obtained by drying a sample in an electric thermostat dryer at 105°C for 3 hours to remove volatile substances.

The content of a physiologically functional substance in the solids of the plant extract is preferably from 0.1 mass% to 99.9 mass%, more preferably from 5 mass% to 65 mass%, even more preferably from 15 mass% to 50 mass%. Herein, the "physiologically functional substance of the plant extract" refers to a substance showing physiological activity among the substances contained in the plant. For example, when the plant extract is a coffee bean extract, the physiologically functional substance is chlorogenic acids, and when the plant extract is a tea extract, the physiologically functional substance is non-polymer catechins. The term "chlorogenic acids" is a generic term for a combination of monocaffeoylquinic acids, such as 3-caffeoylquinic acid, 4-caffeoylquinic acid, and 5-caffeoylquinic acid, and monoferuloylquinic acids, such as 3-feruloylquinic acid, 4-feruloylquinic acid, and 5-feruloylquinic acid. The content of the chlorogenic acids is defined on the basis of the total amount of the six kinds of chlorogenic acids. In addition, the term "non-polymer catechins" is a generic term for a combination of non-gallate forms, such as catechin, gallocatechin, epicatechin, and epigallocatechin, and gallate forms, such as catechin gallate, gallocatechin gallate, epicatechin gallate, and epigallocatechin gallate. The content of the non-polymer catechins is defined on the basis of the total amount of the eight kinds of non-polymer catechins.

In addition, the content of a component other than the physiologically functional substance in the solids of the plant extract is preferably from 0.1 mass% to 99.9 mass%, more preferably from 35 mass% to 95 mass%, even more preferably from 50 mass% to 85 mass%.

Herein, the "component other than the physiologically functional substance of the plant extract" refers to a component that is inevitably mixed in when the plant extract of the present invention is obtained by extracting part or the whole of the plant, and examples thereof include a component extracted by aqueous extraction using a solvent, such as water, hot water, a hydrophilic organic solvent, or a mixture of water and a hydrophilic organic solvent. More specifically, the component is a component other than chlorogenic acid obtained by the aqueous extraction of a coffee bean extract, or a component other than non-polymer catechins obtained by the aqueous extraction of a tea extract. Examples of the component other than the physiologically functional substance of the plant extract include components, such as sucrose and proteins.

In the solids of the plant extract in the present invention, a mass ratio of the physiologically functional substance and the component other than the physiologically functional substance (physiologically functional substance/component other than the physiologically functional substance) is preferably from 0.1 to 2, more preferably from 0.2 to 1, even more preferably from 0.4 to 0.8, from the viewpoint of the granulation property. The mass of the component other than the physiologically functional substance is defined as the total amount of sucrose and proteins.

[(B) Dextrin]

The granular composition of the present invention comprises dextrin as the component (B).

As used herein, the term "dextrin" refers to a product obtained by degrading raw material starch with an enzyme or an acid. A dextrose equivalent (DE value) is generally used as an indicator for grasping the degree of degradation of raw material starch, and the DE value of the dextrin to be used in the present invention is preferably from 2 to 30, more preferably from 2 to 13, even more preferably from 2 to 5, from the standpoint that the effect of the present invention is easily obtained. The DE value may be analyzed by a generally known measurement method for dextrose, and an example thereof may be the Willstatter-Schudel method. In addition, dextrin has a molecular structure in which glucose is polymerized by glycosidic bonds, and the glycosidic bonds may form chain bonding, cyclic bonding, or a mixture thereof. Examples of the bonding mode of glucose include an $\alpha$-1,4 bond, an $\alpha$-1,6 bond, a $\beta$-1,2 bond, a $\beta$-1,3 bond, a $\beta$-1,4 bond, and a $\beta$-1,6 bond. Only a single bonding mode may be adopted, or two or more kinds of bonding modes may be adopted.

The component (B) is dextrin from the standpoints of being easy to handle at the time of extrusion granulation, being excellent in moisture absorption resistance, and allowing satisfactory solubility to be easily obtained in the mouth.

The content of the component (B) in the granular composition of the present invention is 3 mass% or more, preferably 8 mass% or more, more preferably 13 mass% or more, from the viewpoint of an improvement in granulation property. The upper limit of the content of the component (B) may be appropriately set depending on the kind of the component (B), and is not particularly limited, but is preferably 30 mass% or less, more preferably 25 mass% or less, even more preferably 18.6 mass% or less, from the viewpoint of handleability at the time of extrusion granulation. Such content of the component (B) in the granular composition of the present invention falls in the range of preferably from 3 mass% to 30 mass%, more preferably from 8 mass% to 25.0 mass%, even more preferably from 13 mass% to 18.6 mass%.

[(C) Sugar Alcohol]

The granular composition of the present invention comprises a sugar alcohol as the component (C).

Examples of the component (C) may include an alcohol of a monosaccharide, an alcohol of a disaccharide, and an alcohol of a tri- or higher saccharide. The components (C) may be used alone or in combination thereof.

Examples of the alcohol of a monosaccharide include: pentitols, such as erythritol and xylitol; and hexitols, such as sorbitol and mannitol. In addition, examples of the alcohol of a disaccharide include reduced maltose (maltitol), lactitol (reduced lactose), reduced palatinose (isomalt), trehalose, and palatinose. Examples of the alcohol of a tri- or higher saccharide include maltotriitol, isomaltotriitol, and pannitol.

Of those, from the viewpoints of solubility in the mouth, moisture absorption resistance, and handleability at the time of extrusion granulation, one or more selected from the group consisting of an alcohol of a monosaccharide and an alcohol of a disaccharide are preferred, an alcohol of a disaccharide is more preferred, and reduced maltose (maltitol) is even more preferred.

The content of the component (C) in the granular composition of the present invention is set to 5 mass% or more from the viewpoints of the suppression of bitterness and astringency derived from the component (A), and the granulation property, and is preferably 10 mass% or more. In addition, from the viewpoint of a yield, the content of the component (C) is preferably set to 50 mass% or less, and is more preferably 45.3 mass% or less, more preferably 40 mass% or less, more preferably 35 mass% or less, even more preferably 28 mass% or less. Such content of the component (C) in the granular composition of the present invention falls in the range of preferably from 5 mass% to 50 mass%, more preferably from 5 mass% to 45.3 mass%, more preferably from 5 mass% to 40 mass%, more preferably from 5 mass% to 35 mass%, even more preferably from 10 mass% to 28 mass%.

In the granular composition of the present invention, from the viewpoint of improving the granulation property, a mass ratio of the component (A) and the component (C), [(C)/(A)], is preferably 0.15 or more, more preferably 0.18 or more, more preferably 0.3 or more, even more preferably 0.35 or more, and is preferably 2 or less, more preferably 0.8 or less, more preferably 0.6 or less, even more preferably 0.5 or less. Accordingly, in the granular composition of the present invention, the mass ratio [(C)/(A)] is preferably from 0.15 to 2, more preferably from 0.18 to 0.8, more preferably from 0.3 to 0.6, even more preferably from 0.35 to 0.5.

In addition, in the granular composition of the present invention, a mass ratio of the total of the component (B) and the component (C) to the component (A), [[(B)+(C)]/(A)], is preferably 0.3 or more, more preferably 0.4 or more, even more preferably 0.5 or more, from the viewpoints of the granulation property and the yield, and is preferably 3.2 or less, more preferably 2.8 or less, even more preferably 1.0 or less, from the viewpoint of the yield. Such mass ratio [[(B)+(C)]/(A)] falls in the range of preferably from 0.3 to 3.2, more preferably from 0.4 to 2.8, even more preferably from 0.5 to 1.0.

[(D) Cellulose Derivative]

The granular composition of the present invention comprises a cellulose derivative as the component (D).

As used herein, the term "cellulose derivative" refers to cellulose having a substituent, and does not encompass cellulose itself having no substituent. In the cellulose derivative, the hydrogen atoms of all hydroxy groups in a monomer unit (glucose) do not need to be substituted with substituents, and the hydrogen atoms of some of the hydroxy groups only need to be substituted with substituents. The number of substituents in the monomer unit is generally from 1 to 5, preferably from 1 to 3, more preferably 1 or 2.

The component (D) may be hydroxypropyl methylcellulose (HPMC), hydroxypropyl cellulose (HPC), or salts thereof. The components (D) may be used alone or in combination thereof.

Examples of the salt include a metal salt, an acid addition salt, and a salt with a base. Examples of the metal salt include salts with monovalent metals (e.g., sodium and potassium) and salts with divalent metals (e.g., calcium and magnesium). Examples of the acid addition salt include salts with inorganic acids (e.g., hydrogen chloride, hydrogen bromide, sulfuric acid, and phosphoric acid) and salts with organic acids (e.g., acetic acid, lactic acid, citric acid, tartaric acid, maleic acid, fumaric acid, and monomethylsulfuric acid). Examples of the salt with a base include salts with inorganic bases (e.g., ammonia) and salts with organic bases (e.g., ethylenediamine, propylenediamine, ethanolamine, a monoalkylethanolamine, a dialkylethanolamine, diethanolamine, and triethanolamine). The salt is preferably a metal salt.

An alkyl group in each of the hydroxypropyl methylcellulose and the hydroxypropyl cellulose may be linear or branched.

Examples of the hydroxypropyl cellulose include low-substituted hydroxypropyl cellulose (L-HPC).

The hydroxypropyl methylcellulose is a cellulose having both of a hydroxyalkyl group and an alkyl group.

From the standpoint of being excellent in granulation property at the time of the extrusion granulation, one or more kinds selected from the group consisting of hydroxypropyl methyl cellulose and hydroxypropyl cellulose are used.

In addition, from the viewpoint of imparting satisfactory solubility in the mouth, one or more kinds selected from the group consisting of hydroxypropyl methyl cellulose and hydroxypropyl cellulose are used.

The content of the component (D) in the granular composition of the present invention is 0.2 mass% or more, preferably 0.5 mass% or more, and 5 mass% or less, preferably 4 mass% or less, more preferably 2 mass% or less, from the viewpoints of an improvement in granulation property and the impartment of solubility. Such content of the component (D) in the granular composition of the present invention falls in the range of from 0.2 mass% to 5 mass%, preferably from 0.2 mass% to 4 mass%, more preferably from 0.5 mass% to 2 mass%.

In the granular composition of the present invention, the mass ratio of the component (C) and the component (D), [(C)/ (D)], is preferably 3 or more, more preferably 7 or more, more preferably 8.5 or more, even more preferably 9 or more, from the viewpoint of imparting satisfactory solubility in the mouth, and is preferably 60 or less, more preferably 55 or less, more preferably 35 or less, even more preferably 15 or less, from the viewpoint of improving the granulation property. Accordingly, in the granular composition of the present invention, the mass ratio [(C)/(D)] is preferably from 3 to 60, more preferably from 7 to 55, more preferably from 8.5 to 35, even more preferably from 9 to 15.

[Other Components]

The granular composition of the present invention may comprise other components in addition to the components (A), (B), (C), and (D).

The other components are not particularly limited as long as the components are acceptable in a final product, such as a food and beverage or a pharmaceutical, and are orally ingestible. Examples thereof include taste masking agents, such as a sweetener and an acidulant, vitamins, minerals, an antioxidant, a lubricant, and a flavoring agent. The other components may be used alone or in combination thereof. The contents of the other components may be appropriately set in ranges in which the purpose of the present invention is not impaired.

Examples of the sweetener include monosaccharides (e.g., glucose, fructose, and galactose), disaccharides (e.g., maltose, lactose, and sucrose), oligosaccharides (e.g., maltooligosaccharide, fructooligosaccharide, and galactooligosaccharide), isomerized sugars (e.g., glucose fructose syrup and fructose glucose syrup), and high intensity sweeteners (e.g., acesulfame K, aspartame, stevia, sucralose, and thaumatin).

Examples of the acidulant include malic acid, citric acid, tartaric acid, acetic acid, lactic acid, fumaric acid, gluconic acid, phytic acid, succinic acid, phosphoric acid, and sodium salts, potassium salts, and calcium salts thereof.

Examples of the lubricant include a sucrose fatty acid ester, magnesium stearate, calcium stearate, sodium stearyl fumarate, stearic acid, talc, hydrogenated oil, polyethylene glycol, silicon dioxide, and fine silicon dioxide.

[Product Form]

The granular composition of the present invention may be provided as a food, or may be provided as a pharmaceutical for oral administration. Of those, a food is preferred. In addition, the granular composition of the present invention may be used as a tablet manufactured by tableting. Further, the granular composition of the present invention may be packed in a container or bag for a food or a pharmaceutical, and examples thereof include, a mode in which the granular composition is packed in, for example, a container or bag made of paper, a plastic, glass, or a metal. In addition, small portions each corresponding to a single oral ingestion amount may be individually packed. Of those, a form in which small portions each corresponding to a single oral ingestion amount (e.g., from about 1 g to about 2 g) are individually packed (e.g., stick packaging or divided packaging) is preferred. A packaging material is not limited as long as the packaging material is generally used for a food or a pharmaceutical. For example, a packaging material obtained by combining aluminum foil, a synthetic resin (e.g., polyethylene terephthalate), laminated paper, and the like may be used. The inside of the container and the inside of the packaging material may be filled with nitrogen gas from the viewpoint of quality maintenance.

[Usage]

It is preferred that the granular composition of the present invention be orally ingested without water or with a small amount of water, and the small amount of water is preferably 100 mL or less, more preferably 50 mL or less, even more preferably 20 mL or less.

The present invention has been described in detail above on the basis of an embodiment thereof, but the present invention is not limited to the embodiment described above. Various modifications may be made without departing from the spirit of the present invention. For example, the granular composition of the present invention is preferably a granular composition comprising the components (A) to (D) described below, from the viewpoint of providing a granular composition excellent in granulation property while containing a high concentration of a plant extract selected from the group consisting of a coffee bean extract, a tea extract, and a rosemary extract.

That is, the present invention provides a granular composition comprising the following components (A), (B), (C), and (D) :

(A) 20 mass% to 70 mass% of one or more kinds of plant extracts selected from the group consisting of a coffee bean extract, a tea extract, and a rosemary extract;
(B) 3 mass% or more of dextrin;
(C) 5 mass% to 50 mass% of a sugar alcohol; and
(D) 0.2 mass% to 5 mass% of one or more of a cellulose derivative selected from the group consisting of hydroxypropyl methylcellulose and hydroxypropyl cellulose and salts thereof, the cellulose derivative comprising a hydroxypropyl cellulose at 30 mass% or more with respect to the cellulose derivative.

In addition, from the viewpoint of providing a granular composition excellent in granulation property while containing a high concentration of a plant extract selected from the group consisting of a coffee bean extract, a tea extract, and a rosemary extract, the granular composition of the present invention is preferably a granular composition comprising the components (A) to (D) described below, wherein the mass ratio of a physiologically functional substance and a component other than the physiologically functional substance (physiologically functional substance/component other than the physiologically functional substance) in the component (A) is from 0.4 to 0.8.

That is, the present invention provides a granular composition comprising the following components (A), (B), (C), and (D) :

(A) 20 mass% to 70 mass% of one or more kinds of plant extracts selected from the group consisting of a coffee bean extract, a tea extract, and a rosemary extract;
(B) 3 mass% or more of dextrin;
(C) 5 mass% to 50 mass% of maltitol; and
(D) 0.2 mass% to 5 mass% of one or more of a cellulose derivative selected from the group consisting of hydroxypropyl methylcellulose and hydroxypropyl cellulose and salts thereof, the cellulose derivative comprising a hydroxypropyl cellulose at 30 mass% or more with respect to the cellulose derivative,

wherein a mass ratio of a physiologically functional substance and a component other than the physiologically functional substance (physiologically functional substance/component other than the physiologically functional substance) in the component (A) is from 0.4 to 0.8.

From the viewpoint of providing a granular composition that is excellent in granulation property while containing a high concentration of a plant extract selected from the group consisting of a coffee bean extract, a tea extract, and a rosemary extract, and that has imparted thereto satisfactory solubility in the mouth, the granular composition of the present invention is preferably a granular composition comprising the components (A) to (D) described below, wherein a mass ratio of a physiologically functional substance and a component other than the physiologically functional substance (physiologically functional substance/component other than the physiologically functional substance) in the component (A) is from 0.4 to 0.8, and wherein a mass ratio of the component (C) and the component (D), [(C)/ (D)], is from 4 to 60.

That is, the present invention provides a granular composition comprising the following components (A), (B), (C), and (D) :

(A) 20 mass% to 70 mass% of one or more kinds of plant extracts selected from the group consisting of a coffee bean extract, a tea extract, and a rosemary extract;
(B) 3 mass% or more of dextrin;
(C) 5 mass% to 50 mass% of maltitol; and
(D) from 0.2 mass% to 5 mass% of one or more of a cellulose derivative selected from the group consisting of hydroxypropyl methylcellulose and hydroxypropyl cellulose and salts thereof, the cellulose derivative comprising a hydroxypropyl cellulose at 30 mass% or more with respect to the cellulose derivative,

wherein a mass ratio of a physiologically functional substance and a component other than the physiologically functional substance (physiologically functional substance/component other than the physiologically functional substance) in the component (A) is from 0.4 to 0.8, and
wherein a mass ratio of the component (C) and the component (D), [(C) / (D)], is from 4 to 60.

<Method for Producing Granular Composition>

The granular composition of the present invention may be produced in accordance with a conventional method, and an appropriate method may be adopted. For example, the granular composition may be produced through a step of mixing powder raw materials, a kneading step, and a granulation step, and as required, a drying step, a sizing step, and a sieving step.

[Mixing]

First, raw materials, i.e., a plant extract, dextrin, a sugar alcohol, and one or more of a cellulose derivative selected from the group consisting of hydroxypropyl methylcellulose and hydroxypropyl cellulose and salts thereof, and as required, other components are mixed. The form of each of the raw materials is preferably solid, more preferably powder, from the viewpoint of handleability. A method for the mixing of the raw materials may be any method as long as the method allows the components in the raw materials to be homogeneously mixed. Examples of a machine for the mixing include, a container mixer, a V-type mixing machine, a ribbon-type mixing machine, and a high-speed stirring mixing machine (high-speed mixer). Mixing temperature is not particularly limited, but is preferably from 10°C to 35°C, more preferably from 15°C to 25°C. In addition, mixing time is also not particularly limited, but is preferably from 0.5 minute to 5 minutes, more preferably from 1 minute to 3 minutes.

[Kneading]

Next, an aqueous medium is added as a kneading liquid to the mixture of the raw materials described above, followed by kneading. Examples of the aqueous medium include, water, ethanol, or a mixture of water and ethanol. In addition, when the mixture of water and ethanol (aqueous ethanol solution) is used, a mixing ratio thereof is not limited and may be appropriately selected. In this case, as well as a commercially available ethanol preparation, spirits may be used as the aqueous ethanol solution. The spirits is not particularly limited as long as the spirits is edible. Examples of the spirits include, spirits produced from a natural raw material containing a starchy material and saccharides through the alcoholic fermentation action of yeast, or spirits containing those components, and there may be used an ethanol-containing liquid, for example, an alcoholic beverage, such as sake, shochu, wine, whiskey, or brandy, or a fermented seasoning such as mirin. The addition amount of the aqueous medium with respect to the raw material mixture is not particularly limited as long as the amount allows the mixture after the kneading to be granulated with a granulator. In addition, a binder may be added to the aqueous medium (kneading liquid) as required, and examples thereof include monosaccharides, disaccharides, polysaccharides, celluloses, sugar alcohols, and a mixture of two or more kinds thereof. The binder is not particularly limited as long as the binder is pharmaceutically acceptable. In addition, the addition amount thereof is also not particularly limited as long as the amount allows granulation to be performed.

[Granulation]

Next, the mixture after the above-mentioned kneading is granulated. A known method may be adopted as a method for the granulation, and extrusion granulation is preferred because granules having desired particle sizes are easily obtained and the particle sizes are easily controlled. The "extrusion granulation" refers to a method involving granulating powder, which has plasticity imparted thereto through kneading with the addition of an aqueous medium, by extrusion with a screw, a roller, or the like from a screen having a large number of holes or a die having a predetermined hole size. Examples of a machine for the granulation include, a lateral extrusion-type granulator, a frontal extrusion-type granulator, a dome extrusion-type granulator, a disc pelleter-type granulator, a ring die-type granulator, a basket-type granulator, an oscillating-type granulator, and a cylinder-type granulator. Granulation conditions may be appropriately set. In order to prevent aspiration at the time of ingestion and obtain a quick-soluble and satisfactory granule bulk specific gravity, an extrusion hole having a hole size of from about 0.5 mm to about 2 mm is preferably used, and an extrusion hole having a hole size of from 0.8 mm to 1.2 mm is more preferably used.

[Drying]

The drying of the granulated product may be performed by a general drying method. Examples of a machine for drying include a thermostat dryer, a forced-air dryer, a fluidized-bed dryer, a reduced-pressure dryer, and a vacuum dryer. Drying conditions may be appropriately set.

[Sizing/Sieving]

As required, the granulated product may be subjected to the sizing step to be controlled to a desired particle size. For example, it is appropriate to perform sifting with, for example, a sieve or electric sieve having a predetermined hole size.

Thus, the granular composition of the present invention can be produced in a simple manner. The following method may be given as a suitable mode.

That is, there is provided a method for producing a granular composition, comprising the following steps (1) to (4) :

(1) a step of mixing the following components (A), (B), (C), and (D):

(A) 20 mass% to 70 mass% of a plant extract;
(B) 3 mass% or more of dextrin;
(C) 5 mass% to 50 mass% of a sugar alcohol; and
(D) from 0.2 mass% to 5 mass% of one or more of a cellulose derivative selected from the group consisting of hydroxypropyl methylcellulose and hydroxypropyl cellulose and salts thereof;

(2) a step of adding an aqueous medium to the mixture after the step (1), followed by kneading;
(3) a step of subjecting the kneaded product after the step (2) to extrusion granulation through use of an extrusion hole having a hole size of from 0.5 mm to 2 mm; and
(4) a step of drying the granulated product after the step (3) to obtain a granular composition.

In addition, in the above-mentioned method, from the viewpoint of the granulation property, a mass ratio of a physiologically functional substance and a component other than the physiologically functional substance (physiologically functional substance/component other than the physiologically functional substance) in the component (A) may be adjusted to fall in the above-mentioned ranges. In addition, from the viewpoint of imparting satisfactory solubility in the mouth and the viewpoint of improving the granulation property, a mass ratio of the component (C) and the component (D), [(C)/(D)], may be adjusted to fall in the above-mentioned ranges. Further, from the viewpoint of an improvement in granulation property, as the cellulose derivative, there may be used a cellulose derivative comprising the hydroxypropyl cellulose in the above-mentioned amount with respect to the cellulose derivative. Specific modes of the components (A), (B), (C), and (D) are as described above.

Examples

The present invention is more specifically described below by way of Examples and Comparative Examples, but the present invention is not limited to these Examples.

1. Analysis of Plant Extract

(1) Analysis of Non-polymer Catechins

A sample solution was filtered through a filter (0.45 um), and was analyzed by a gradient method through use of a high-performance liquid chromatograph (model SCL-10AVP, manufactured by Shimadzu Corporation) equipped with an octadecyl group-introduced packed column for a liquid chromatograph L-Column TM ODS (4.6 mmφ×250 mm: manufactured by Chemicals Evaluation and Research Institute, Japan) at a column temperature of 40°C. A product manufactured by Kurita Water Industries Ltd. was used as a standard product of non-polymer catechins, and the content of the non-polymer catechins was determined by a calibration curve method. The determination was performed by using a distilled water solution containing 0.1 mol/L acetic acid as a solution A of a mobile phase and an acetonitrile solution containing 0.1 mol/L acetic acid as a solution B thereof under the conditions of a sample injection volume of 20 μL and a UV detector wavelength of 280 nm. Gradient conditions are as described below.

Concentration Gradient Conditions

| Time (min) | Concentration of solution A (vol%) | Concentration of solution B (vol%) |
|---|---|---|
| 0 | 97% | 3% |

(continued)

| Time (min) | Concentration of solution A (vol%) | Concentration of solution B (vol%) |
|---|---|---|
| 5 | 97% | 3% |
| 37 | 80% | 20% |
| 43 | 80% | 20% |
| 43.5 | 0% | 100% |
| 48.5 | 0% | 100% |
| 49 | 97% | 3% |
| 60 | 97% | 3% |

(2) Analysis of Chlorogenic Acids and Rosmarinic Acid

A sample solution was filtered through a filter (0.45 um), and analysis was performed by a gradient method through use of a high-performance liquid chromatograph (model LC-20 Prominence, manufactured by Shimadzu Corporation) equipped with a column [Cadenza CD-C18 (3 um, 4.6 mm$\varphi$×150 mm, Imtakt)] at a column temperature of 35°C. The analysis was performed by using a 5% acetonitrile solution containing 0.05 mol/L acetic acid, 0.01 mol/L sodium acetate, and 0.1 mmol/L HEDPO as a solution C of a mobile phase and an acetonitrile solution as a solution D thereof under the conditions of a flow rate of 1 mL/min, a sample injection volume of 10 $\mu$L, and a UV detector wavelength of 325 nm. Gradient conditions are as described below.

Concentration Gradient Conditions

| Time (min) | Concentration of solution C (vol%) | Concentration of solution D (vol%) |
|---|---|---|
| 0 | 100% | 0% |
| 10 | 100% | 0% |
| 15 | 95% | 5% |
| 20 | 95% | 5% |
| 22 | 92% | 8% |
| 50 | 92% | 8% |
| 52 | 10% | 90% |
| 60 | 10% | 90% |
| 60.1 | 100 | 0% |
| 70 | 100% | 0% |

(3) Loss on Drying

1 g of a sample was evenly spread over an aluminum dish having an inner diameter of 4 cm, and was heated in an oven at 105°C for 3 hours. After that, the weight of the sample was measured, and its loss on drying was calculated.

$$\texttt{Loss on drying [\%]=(P-Q)/P×100}$$

In the equation, P represents the weight of the sample before drying, and Q represents the weight of the sample after drying.

(4) Median Diameter

3 g of a sample was subjected to Camsizer XT (manufactured by Verder Scientific), and the sample was measured for its median diameter (D50) through digital image analysis under the following measurement conditions. The median diameter was the average of three measured values for the same test sample granules.
·Dispersion pressure [kPa]: 30
·Measurement range: 1 $\mu$m to 2,000 $\mu$m
·Number of particles to be measured: about 1,000,000 particles
·Measurement halt: The number of images in which no particles are present is 150 (300 images are taken in 1 second).

2. Analysis of Dextrin

To a sample and 1.5 mL of a standard solution having each concentration, 250 $\mu$L of a 1 N-NaOH aqueous solution and 500 $\mu$L of a 0.5 M PMP (3-methyl-1-phenyl-5-pyrazolone)-methanol solution were added, and the mixture was heated at 70°C for 30 minutes. The resultant solution was neutralized with 250 $\mu$L of a 1 N-HCl aqueous solution, 5 mL of chloroform is added for separation, and the aqueous layer was used as a measurement sample. The measurement sample obtained by the above-mentioned operations was subjected to measurement using high-performance liquid chromatography-mass spectrometry under the following conditions.

Analysis Conditions

·HPLC apparatus: model ACQUITY UPLC, manufactured by Waters
·MS apparatus: model SYNAPT G2-S HDMS type, manufactured by Waters
·Ionization: ESI
·Mass range: m/z 100-2,500
·Column: model Unison UK-C18 UP (2.0×100 mm, 3 $\mu$m), manufactured by Imtakt Corporation
·Mobile phase: solution E: 0.05% formic acid aqueous solution, solution F: acetonitrile (%F=15,90)
·Flow rate: 0.6 mL/min
·Injection volume: 1 $\mu$L

3. Analysis of Sugar Alcohol

The analysis of a sugar alcohol was performed by high-performance liquid chromatography (HPLC) in accordance with the following method.
The apparatus configuration of an analyzer is as described below.

·Detector: differential refractometer RID-10A (manufactured by Shimadzu Corporation)
·Column: Shodex Asahipak NH2P-50 4E, $\varphi$4.6 mm×250 mm (manufactured by Showa Denko K.K.)

The analysis conditions are as described below.

·Column temperature: room temperature
·Mobile phase: mixed solution of acetonitrile and water (volume ratio: 81:19)
·Flow rate: 1 mL/min
·Sample injection volume: 20 $\mu$L

A sample for analysis was prepared by the following procedure.
3 g of a sample was weighed, and dissolved and neutralized by adding 10 mL of water thereto. The resultant solution was subjected to ultrasonic extraction for 30 minutes using an ultrasonic cleaner. The solution was adjusted to a fixed volume of 20 mL by adding water thereto. The solution was filtered through a membrane filter to give a sample solution. The sample solution was subjected to high-performance liquid chromatographic analysis.

4. Analysis of Cellulose Derivative

The analysis of a cellulose derivative was performed by high-performance liquid chromatography (HPLC) in accordance with the following method.
The apparatus configuration of an analyzer is as described below.

·Detector: Shodex RI

·Column: Shodex OHpac SB-806M HQ (8.0 mm I.D.×300 mm)×2

The analysis conditions are as described below.

·Column temperature: 40°C
·Mobile phase: 0.1 M NaCl aq.
·Flow rate: 1 mL/min
·Sample injection volume: 20 μL

5. Evaluation of Granular Composition

(1) Granulation Evaluation

When all of the following requirements (a) to (c) were satisfied, it was judged as "acceptable for granulation". When any one or more of (a) to (c), it was judged as "unacceptable for granulation".

(a) During granulation, a granulator load [current value: A] displayed on an extrusion granulator does not exceed a limit (3.6 A).
(b) The median diameter (D50) of a granular composition falls in the range of from 0.5 mm to 2.0 mm.
(c) A yield is 70% or more.

Failure to satisfy the requirement (a) can result in incapability of granulation. Failure to satisfy one or more of (b) and (c) can run a risk of causing a problem such as choking at ingestion. Accordingly, it was judged as incapable of providing a desired granulated product in these cases.

(i) Median Diameter

3 g of test sample granules were subjected to Camsizer XT (manufactured by Verder Scientific), and the test sample granules were measured for their median diameter (D50) through digital image analysis under the following measurement conditions. The median diameter was the average of three measured values for the same test sample granules.

-Dispersion pressure [kPa]: 30
·Measurement range: 1 μm to 2,000 μm
·Number of particles to be measured: about 1,000,000 particles
·Measurement halt: The number of images in which no particles are present is 150 (300 images are taken in 1 second).

(ii) Yield

Test sample granules obtained by extrusion granulation described in each of Examples and Comparative Examples were dried by being left to stand in a thermostatic chamber at 55°C for 30 minutes, and then the test sample granules were sieved using a 30-mesh (aperture: 500 μm) stainless-steel sieve. A yield was calculated by the following equation from the ratio of the weight of granules that did not sift through the 30-mesh sieve.

Yield [%]=[(weight of 30-mesh-on granules) / (weight of all recovered granules)] ×100

(2) 90% Dissolution Time

Through use of a conductivity analyzer (HORIBA ES-71), a change in electric conductivity [mS/m] at the time of adding 1.54 g of test sample granules to a beaker filled with 200 g of ion-exchanged water was measured with time every 2 seconds . A point at which the value of electric conductivity remained unchanged for 10 seconds or more after the dissolution of the test sample granules was defined as the 100% dissolution point of the test sample granules. The value of electric conductivity at the 100% dissolution point was multiplied by 0.9, and the resultant value was defined as the 90% dissolution point of the test sample granules, and the time point at which the electric conductivity at the 90% dissolution point was reached was defined as the 90% dissolution time. In the value of electric conductivity, decimal points are regarded as an allowable error.

6. Raw Materials

The raw materials used in Examples are shown below.

·Sugar alcohol: manufactured by Lesys fine powder (Mitsubishi Corporation Life Sciences Limited, content of maltitol: 99.5%)
·Dextrin: Sandec #30 (manufactured by Sanwa Starch Co., Ltd., DE=2 to 5)
·Cellulose derivative:

HPMC (manufactured by Shin-Etsu Chemical Co., Ltd., product number: SE-03)
CMC (manufactured by Nippon Paper Industries Co., Ltd., product number: SLD-FM)
HPC (manufactured by Nippon Soda Co., Ltd., product number: CELNY SL)
MC (manufactured by Shin-Etsu Chemical Co., Ltd., product number: MCE-4)

·Taste masking agent (balance): aspartame (manufactured by Ajinomoto Healthy Supply Co., Inc.)
·Aqueous medium: 99.5% ethanol (Japan Alcohol Trading Co., Ltd.)

Production Example 1

Plant Extract I

400 g of green tea leaves were added into 10 kg of hot water heated to 90°C, and extraction was conducted for 5 minutes while being gently stirred. After the extraction, the resultant was filtered through #2 filter paper, and the filtrate was immediately cooled to room temperature. The resultant green tea extract solution was centrifuged and dried under reduced pressure, followed by freeze-drying to provide a green tea extract. The green tea extract had a loss on drying of 4.5 mass%. The green tea extract is referred to as "plant extract I".

Production Example 2

Plant Extract II

400 g of coffee beans having an L value of 50 (Vietnam) were loaded into a drip extractor, and the bottom of the lower of the drip extractor was charged with 0.25 L of hot water. After that, 1.02 L of warm water was supplied from the upper of the drip extractor through a shower, and this state was held for 10 minutes. After the holding, while warm water was supplied through the shower, the water was discharged from the lower of the drip extractor at a rate of 12.5 g/10 seconds. When a collected amount reached 2.4 L, liquid collection was stopped, and the collected liquid was used as an extract solution. The resultant extract solution was dried using a spray dryer to provide a powdered coffee bean extract. The coffee bean extract had a loss on drying of 3.9 mass%. The coffee bean extract is referred to as "plant extract II".

Production Example 3

Plant Extract III

A powdered rosemary extract (manufactured by Nichino Kagaku Kogyo Co., Ltd.) was used. The rosemary extract is referred to as "plant extract III".
The analysis results of each plant extract are shown in Table 1.

Table 1

|  | Plant extract I | Plant extract II | Plant extract III |
|---|---|---|---|
| Non-polymer catechins [mass%] | 36.9 | - | - |
| Chlorogenic acids [mass%] | - | 36.1 | - |
| Rosmarinic acid | - | - | 15.2 |
| Loss on drying [mass%] | 4.5 | 3.9 | 2.3 |
| Median diameter [μm] | 35 | 133 | 43 |

Examples 1 and 2

The powdered plant extract I or plant extract II, maltitol, dextrin, HPMC, and a taste masking agent (balance) were homogeneously mixed at ratios (mass%) shown in Table 2 to prepare a powder mixture. 99.5% ethanol was added thereto as a kneading liquid at 20 mass% with respect to the powder mixture, and the mixture was kneaded so as to be homogeneously spread. The powder mixture after the kneading was granulated through use of an extrusion granulator (manufactured by Dalton Corporation, Multigran MG-55-1) with a screen having a hole size of 0.8 mm, and the resultant granulated product was dried by being left to stand in a thermostatic chamber at 55°C for 30 minutes to provide a granular composition. Then, the resultant granular composition was analyzed and evaluated. The results are shown in Table 2. Aspartame was used as a taste masking agent (balance), because aspartame had a particle size comparable to those of the other raw materials in the formulation, and aspartame was conceived to be relatively less liable to affect the granulation property than any other masking agent.

Table 2

| | | | Example 1 | Example 2 |
|---|---|---|---|---|
| Formulation | Plant extract I | mass% | 50.7 | - |
| | Plant extract II | mass% | - | 50.7 |
| | HPMC | mass% | 2.0 | 2.0 |
| | Maltitol | mass% | 26.4 | 26.4 |
| | Dextrin | mass% | 13.3 | 13.3 |
| | Taste masking agent (balance) | mass% | 7.6 | 7.6 |
| | Total | mass% | 100 | 100 |
| Analys is or calcula tion | (A) Plant extract | mass%[*1] | 48.4 | 48.7 |
| | (B) Dextrin | mass%[*1] | 13.3 | 13.3 |
| | (C) Sugar alcohol | mass%[*1] | 26.4 | 26.4 |
| | (D) Cellulose derivative | mass%[*1] | 2.0 | 2.0 |
| | Mass ratio {(B)+(C)}/(A) | - | 0.8 | 0.8 |
| | Mass ratio [(C)/(A)] | - | 0.55 | 0.54 |
| | Mass ratio [(C)/(D)] | - | 13.2 | 13.2 |
| Evalua tion | Granulation | - | Acceptable | Acceptable |
| | Granulation load | [A] | 2.7 | 3 |
| | Median diameter | [mm] | 0.76 | 0.74 |
| | Yield | [%] | 93.0 | 94.6 |
| | 90% dissolution time | [sec] | 12 | 14 |
| *1 Solids with respect to the granular composition | | | | |

Examples 3 to 5

Granular compositions were obtained by the same operations as in Example 2 except that the blending amounts of the powdered plant extract II, maltitol, dextrin, HPMC, and the taste masking agent (balance) were changed to amounts shown in Table 3. Then, the resultant granular compositions were analyzed and evaluated in the same manner as in Example 2. The results are shown in Table 3 together with the results of Example 2.

Table 3

| | | | Example 3 | Example 2 | Example 4 | Example 5 |
|---|---|---|---|---|---|---|
| Formulation | Plant extract II | mass% | 25.0 | 50.7 | 60.0 | 70.0 |
| | HPMC | mass% | 2.0 | 2.0 | 2.0 | 2.0 |
| | Maltitol | mass% | 45.3 | 26.4 | 20.0 | 12.3 |
| | Dextrin | mass% | 22.6 | 13.3 | 10.0 | 6.1 |
| | Taste masking agent (balance) | mass% | 5.1 | 7.6 | 8.0 | 9.6 |
| | Total | mass% | 100 | 100 | 100 | 100 |
| Analysis or calculation | (A) Plant extract | mass%[*1] | 24.0 | 48.7 | 57.7 | 67.3 |
| | (B) Dextrin | mass%[*1] | 22.6 | 13.3 | 10.0 | 6.1 |
| | (C) Sugar alcohol | mass%[*1] | 45.3 | 26.4 | 20.0 | 12.3 |
| | (D) Cellulose derivative | mass%[*1] | 2.0 | 2.0 | 2.0 | 2.0 |
| | Mass ratio {(B)+(C)}/(A) | - | 2.8 | 0.8 | 0.5 | 0.3 |
| | Mass ratio [(C)/(A)] | - | 1.89 | 0.54 | 0.35 | 0.18 |
| | Mass ratio [(C)/(D)] | - | 22.7 | 13.2 | 10.0 | 6.15 |
| Evaluation | Granulation | - | Acceptable | Acceptable | Acceptable | Acceptable |
| | Granulation load | [A] | 2.7 | 3 | 2.9 | 3.4 |
| | Median diameter | [mm] | 0.68 | 0.74 | 0.76 | 0.70 |
| | Yield | [%] | 91.1 | 94.6 | 94.2 | 92.6 |
| | 90% dissolution time | [sec] | 10 | 14 | 16 | 20 |
| *1 Solids with respect to the granular composition | | | | | | |

Example 6

A granular composition was obtained by the same operations as in Example 1 except that the blending amounts of the powdered plant extract I, maltitol, dextrin, HPMC, and the taste masking agent (balance) were changed to amounts shown in Table 4. Then, the resultant granular composition was analyzed and evaluated in the same manner as in Example 1. The results are shown in Table 4.

Comparative Example 1

A granular composition was obtained by the same operations as in Example 1 except that ferulic acid, crystalline cellulose, scallop powder, fine silicon dioxide, and calcium stearate were further blended at ratios shown in Table 4 in addition to the powdered plant extract I, maltitol, dextrin, and HPMC. Then, the resultant granular composition was analyzed and evaluated in the same manner as in Example 1. The results are shown in Table 4.

Table 4

|  |  |  | Comparative Example 1 | Example 6 |
|---|---|---|---|---|
| Formulation | Plant extract I | mass% | 25.0 | 25.0 |
|  | HPMC | mass% | 1.7 | 2.0 |
|  | Maltitol | mass% | 3.3 | 45.3 |
|  | Dextrin | mass% | 1.9 | 22.6 |
|  | Taste masking agent (balance) | mass% | - | 5.1 |
|  | Ferulic acid | mass% | 49.8 | - |
|  | Crystalline cellulose | mass% | 9.2 | - |
|  | Scallop powder | mass% | 8.2 | - |
|  | Fine silicon dioxide | mass% | 1.3 | - |
|  | Calcium stearate | mass% | 0.9 | - |
|  | Total | mass% | 100 | 100 |
| Analysis or calculation | (A) Plant extract | mass%[*1] | 23.9 | 23.9 |
|  | (B) Dextrin | mass%[*1] | 1.9 | 22.6 |
|  | (C) Sugar alcohol | mass%[*1] | 3.3 | 45.3 |
|  | (D) Cellulose derivative | mass%[*1] | 1.7 | 2.0 |
|  | Mass ratio {(B)+(C)}/(A) | - | 0.2 | 2.8 |
|  | Mass ratio [(C)/(A)] | - | 0.14 | 1.90 |
|  | Mass ratio [(C)/(D)] | - | 1.94 | 22.7 |
| Evaluation | Granulation | - | Unacceptable | Acceptable |
|  | Granulation load | [A] | 3.7 | 2.7 |
|  | Median diameter | [mm] | N.T. | 0.7 |
|  | Yield | [%] | N.T. | 92.0 |
|  | 90% dissolution time | [sec] | N.T. | 10 |
| *1 Solids with respect to the granular composition | | | | |

Example 7 and Comparative Example 2

Granular compositions were obtained by the same operations as in Example 2 except that the blending amounts of the powdered plant extract II, maltitol, dextrin, HPMC, and the taste masking agent (balance) were changed to amounts shown in Table 5. Then, the resultant granular compositions were analyzed and evaluated in the same manner as in Example 2. The results are shown in Table 5.

# EP 4 056 047 B1

Table 5

|  |  |  | | Comparative Example 2 | Example 7 |
|---|---|---|---|---|---|
| Formulation | Plant extract II | mass% | | 30.0 | 30.0 |
| | HPMC | mass% | | - | 2.0 |
| | Maltitol | mass% | | 43.0 | 43.0 |
| | Dextrin | mass% | | 20.0 | 20.0 |
| | Taste masking agent (balance) | mass% | | 7.0 | 5.0 |
| | Total | mass% | | 100 | 100 |
| Analysis or calculation | (A) Plant extract | mass%[*1] | | 28.8 | 28.8 |
| | (B) Dextrin | mass%[*1] | | 20.0 | 20.0 |
| | (C) Sugar alcohol | mass%[*1] | | 43.0 | 43.0 |
| | (D) Cellulose derivative | mass%[*1] | | - | 2.0 |
| | Mass ratio {(B)+(C)}/(A) | - | | 2.2 | 2.2 |
| | Mass ratio [(C)/(A)] | - | | 1.49 | 1.49 |
| | Mass ratio [(C)/(D)] | - | | - | 21.5 |
| Evaluation | Granulation | - | | Unacceptable | Acceptable |
| | Granulation load | [A] | | 2.6 | 2.8 |
| | Median diameter | [mm] | | 0.32 | 0.70 |
| | Yield | [%] | | 37.4 | 92.6 |
| | 90% dissolution time | [sec] | | N.T. | 12 |
| *1 Solids with respect to the granular composition | | | | | |

Examples 8 to 12

Granular compositions were obtained by the same operations as in Example 2 except that the blending amounts of the powdered plant extract II, maltitol, dextrin, HPMC, and the taste masking agent (balance) were changed to amounts shown in Table 6. Then, the resultant granular compositions were analyzed and evaluated in the same manner as in Example 2. The results are shown in Table 6.

Table 6

|  |  |  | Example 8 | Example 9 | Example 10 | Example 11 | Example 12 |
|---|---|---|---|---|---|---|---|
| Formulation | Plant extract II | mass% | 50.7 | 50.7 | 50.7 | 50.7 | 50.7 |
| | HPMC | mass% | 1.0 | 1.0 | 1.0 | 1.0 | 1.0 |
| | Maltitol | mass% | 26.4 | 26.4 | 26.4 | 26.4 | 26.4 |
| | Dextrin | mass% | 4.0 | 5.0 | 8.0 | 13.3 | 18.6 |
| | Taste masking agent (balance) | mass% | 17.9 | 16.9 | 13.9 | 8.6 | 3.3 |
| | Total | mass% | 100 | 100 | 100 | 100 | 100 |

(continued)

| | | | Example 8 | Example 9 | Example 10 | Example 11 | Example 12 |
|---|---|---|---|---|---|---|---|
| Analysis or calculation | (A) Plant extract | mass%[*1] | 48.7 | 48.7 | 48.7 | 48.7 | 48.7 |
| | (B) Dextrin | mass%[*1] | 4.0 | 5.0 | 8.0 | 13.3 | 18.6 |
| | (C) Sugar alcohol | mass%[*1] | 26.4 | 26.4 | 26.4 | 26.4 | 26.4 |
| | (D) Cellulose derivative | mass%[*1] | 1.0 | 1.0 | 1.0 | 1.0 | 1.0 |
| | Mass ratio {(B)+ (C)}/(A) | - | 0.6 | 0.6 | 0.7 | 0.8 | 0.9 |
| | Mass ratio [(C)/ (A)] | - | 0.54 | 0.54 | 0.54 | 0.54 | 0.54 |
| | Mass ratio [(C)/ (D)] | - | 26.4 | 26.4 | 26.4 | 26.4 | 26.4 |
| Evaluation | Granulation | - | Acceptable | Acceptable | Acceptable | Acceptable | Acceptable |
| | Granulation load | [A] | 2.7 | 2.7 | 2.7 | 2.7 | 2.8 |
| | Median diameter | [mm] | 0.50 | 0.52 | 0.58 | 0.62 | 0.61 |
| | Yield | [%] | 76.9 | 79.1 | 83.3 | 88.6 | 91.7 |
| | 90% dissolution time | [sec] | 10 | 10 | 10 | 10 | 12 |
| *1 Solids with respect to the granular composition | | | | | | | |

Example 13 to 15 and Comparative Example 3

Granular compositions were obtained by the same operations as in Example 2 except that the blending amounts of HPMC and the taste masking agent (balance) were changed to amounts shown in Table 7. Then, the resultant granular compositions were analyzed and evaluated in the same manner as in Example 2. The results are shown in Table 7 together with the results of Examples 2 and 11.

Example 16 to 18

Granular compositions were obtained by the same operations as in Example 4 except that the blending amounts of HPMC and the taste masking agent (balance) were changed to amounts shown in Table 7. Then, the resultant granular compositions were analyzed and evaluated in the same manner as in Example 4. The results are shown in Table 7 together with the results of Example 4.

Table 7

| | | | Comparative Example 3 | Example 13 | Example 11 | Example 2 | Example 14 | Example 15 | Example 16 | Example 17 | Example 4 | Example 18 |
|---|---|---|---|---|---|---|---|---|---|---|---|---|
| Formulation | Plant extract II | mass% | 50.7 | 50.7 | 50.7 | 50.7 | 50.7 | 50.7 | 60.0 | 60.0 | 60.0 | 60.0 |
| | HPMC | mass% | - | 0.5 | 1.0 | 2.0 | 3.0 | 5.0 | 0.5 | 1.0 | 2.0 | 5.0 |
| | Maltitol | mass% | 26.4 | 26.4 | 26.4 | 26.4 | 26.4 | 26.4 | 20.0 | 20.0 | 20.0 | 20.0 |
| | Dextrin | mass% | 13.3 | 13.3 | 13.3 | 13.3 | 13.3 | 13.3 | 10.0 | 10.0 | 10.0 | 10.0 |
| | Taste masking agent (balance) | mass% | 9.6 | 9.1 | 8.6 | 7.6 | 6.6 | 4.6 | 9.5 | 9.0 | 8.0 | 5.0 |
| | Total | mass% | 100 | 100 | 100 | 100 | 100 | 100 | 100 | 100 | 100 | 100 |
| Analysis or calculation | (A) Plant extract | mass%*1 | 48.7 | 48.7 | 48.7 | 48.7 | 48.7 | 48.7 | 57.7 | 57.7 | 57.7 | 57.7 |
| | (B) Dextrin | mass%*1 | 13.3 | 13.3 | 13.3 | 13.3 | 13.3 | 13.3 | 10.0 | 10.0 | 10.0 | 10.0 |
| | (C) Sugar alcohol | mass%*1 | 26.4 | 26.4 | 26.4 | 26.4 | 26.4 | 26.4 | 20.0 | 20.0 | 20.0 | 20.0 |
| | (D) Cellulose derivative | mass%*1 | - | 0.5 | 1.0 | 2.0 | 3.0 | 5.0 | 0.5 | 1.0 | 2.0 | 5.0 |
| | Mass ratio {(B)+(C)}/(A) | - | | 0.8 | 0.8 | 0.8 | 0.8 | 0.8 | 0.8 | 0.5 | 0.5 | 0.5 | 0.5 |
| | Mass ratio [(C)/(A)] | - | | 0.54 | 0.54 | 0.54 | 0.54 | 0.54 | 0.54 | 0.35 | 0.35 | 0.35 | 0.35 |
| | Mass ratio [(C)/(D)] | - | - | | 52.8 | 26.4 | 13.2 | 8.80 | 5.28 | 40.0 | 20.0 | 10.0 | 4.00 |

EP 4 056 047 B1

(continued)

| Evaluation | | | Comparative Example 3 | Example 13 | Example 11 | Example 2 | Example 14 | Example 15 | Example 16 | Example 17 | Example 4 | Example 18 |
|---|---|---|---|---|---|---|---|---|---|---|---|---|
| | Granulation | - | Unacceptable | Acceptable | Acceptable e | Acceptable e | Acceptable e | Acceptable e | Acceptable e | Acceptable e | Acceptable e | Acceptable e |
| | Granulation load | [A] | 2.6 | 2.6 | 2.7 | 3 | 3.1 | 3.3 | 2.7 | 2.7 | 2.9 | 3.2 |
| | Median diameter | [mm] | 0.23 | 0.55 | 0.62 | 0.67 | 0.72 | 0.8 | 0.57 | 0.61 | 0.76 | 0.79 |
| | Yield | [%] | 30.6 | 77.9 | 88.6 | 94.6 | 97.7 | 98.8 | 76.1 | 86.8 | 94.2 | 98.3 |
| | 90% dissolution time | [see] | N.T. | 8 | 10 | 14 | 22 | 40 | 6 | 12 | 16 | 44 |
| *1 Solids with respect to the granular composition | | | | | | | | | | | | |

Example 19

A granular composition was obtained by the same operations as in Example 11 except that: the blending amount of the taste masking agent (balance) was changed to an amount shown in Table 8; and CMC was further blended in an amount shown in Table 8. Then, the resultant granular composition was analyzed and evaluated in the same manner as in Example 11. The results are shown in Table 8 together with the results of Example 11.

Example 20

A granular composition was obtained by the same operations as in Example 2 except that: the blending amount of the taste masking agent (balance) was changed to an amount shown in Table 8; and CMC was further blended in an amount shown in Table 8. Then, the resultant granular composition was analyzed and evaluated in the same manner as in Example 2. The results are shown in Table 8 together with the results of Example 2.

Examples 21 and 22

Granular compositions were obtained by the same operations as in Example 17 except that: the blending amount of the taste masking agent (balance) was changed to an amount shown in Table 8; and CMC was further blended in an amount shown in Table 8. Then, the resultant granular compositions were analyzed and evaluated in the same manner as in Example 17. The results are shown in Table 8 together with the results of Example 17.

Examples 23 and 24

Granular compositions were obtained by the same operations as in Example 4 except that: the blending amount of the taste masking agent (balance) was changed to an amount shown in Table 8; and CMC was further blended in an amount shown in Table 8. Then, the resultant granular compositions were analyzed and evaluated in the same manner as in Example 4. The results are shown in Table 8 together with the results of Example 4.

Table 8

| | | | Example 11 | Example 19 | Example 2 | Example 20 | Example 17 | Example 21 | Example 22 | Example 4 | Example 23 | Example 24 |
|---|---|---|---|---|---|---|---|---|---|---|---|---|
| Formulation | Plant extract II | mass% | 50.7 | 50.7 | 50.7 | 50.7 | 60.0 | 60.0 | 60.0 | 60.0 | 60.0 | 60.0 |
| | HPMC | mass% | 1.0 | 1.0 | 2.0 | 2.0 | 1.0 | 1.0 | 1.0 | 2.0 | 2.0 | 2.0 |
| | CMC | mass% | - | 1.0 | - | 1.0 | - | 1.0 | 2.0 | - | 1.0 | 2.0 |
| | Maltitol | mass% | 26.4 | 26.4 | 26.4 | 26.4 | 20.0 | 20.0 | 20.0 | 20.0 | 20.0 | 20.0 |
| | Dextrin | mass% | 13.3 | 13.3 | 13.3 | 13.3 | 10.0 | 10.0 | 10.0 | 10.0 | 10.0 | 10.0 |
| | Taste masking agent (balance) | mass% | 8.6 | 7.6 | 7.6 | 6.6 | 9.0 | 8.0 | 7.0 | 8.0 | 7.0 | 60 |
| | Total | mass% | 100 | 100 | 100 | 100 | 100 | 100 | 100 | 100 | 100 | 100 |
| Analysis or calculation | (A) Plant extract | mass%[*1] | 48.7 | 48.7 | 48.7 | 48.7 | 57.7 | 57.7 | 57.7 | 57.7 | 57.7 | 57.7 |
| | (B) Dextrin | mass%[*1] | 13.3 | 13.3 | 13.3 | 13.3 | 10.0 | 10.0 | 10.0 | 10.0 | 10.0 | 10.0 |
| | (C) Sugar alcohol | mass%[*1] | 26.4 | 26.4 | 26.4 | 26.4 | 20.0 | 20.0 | 20.0 | 20.0 | 20.0 | 20.0 |
| | (D) Cellulose derivative | mass%[*1] | 1.0 | 1.0 | 2.0 | 2.0 | 1.0 | 1.0 | 1.0 | 2.0 | 2.0 | 2.0 |
| | Mass ratio {(B)+(C)}/(A) | - | 0.8 | 0.8 | 0.8 | 0.8 | 0.5 | 0.5 | 0.5 | 0.5 | 0.5 | 0.5 |
| | Mass ratio [(C)/(A)] | - | 0.54 | 0.54 | 0.54 | 0.54 | 0.35 | 0.35 | 0.35 | 0.35 | 0.35 | 0.35 |
| | Mass ratio [(C)/(D)] | - | 26.4 | 26.4 | 13.2 | 13.2 | 20.0 | 20.0 | 20.0 | 10.0 | 10.0 | 10.0 |

| | | | Example 11 | Example 19 | Example 2 | Example 20 | Example 17 | Example 21 | Example 22 | Example 4 | Example 23 | Example 24 |
|---|---|---|---|---|---|---|---|---|---|---|---|---|
| Evaluation | Granulation | - | Acceptable e | Acceptable e | Acceptable e | Acceptable e | Acceptable e | Acceptable e | Acceptable e | Acceptable e | Acceptable e | Acceptable e |
| | Granulation load | [A] | 2.7 | 2.8 | 3 | 3 | 2.7 | 2.7 | 2.7 | 2.9 | 2.9 | 3.0 |
| | Median diameter | [mm] | 0.62 | 0.61 | 0.67 | 0.66 | 0.61 | 0.61 | 0.62 | 0.76 | 0.68 | 0.68 |
| | Yield | [%] | 88.6 | 85.9 | 94.6 | 93.5 | 86.8 | 86.5 | 85.9 | 94.2 | 94.4 | 94.0 |
| | 90%dissolution time | [sec] | 10 | 8 | 14 | 10 | 12 | 8 | 8 | 16 | 14 | 14 |
| *1 Solids with respect to the granular composition | | | | | | | | | | | | |

Examples 25 to 27

Granular compositions were obtained by the same operations as in Example 11 except that the blending amounts of maltitol and the taste masking agent (balance) were changed to amounts shown in Table 9. Then, the resultant granular compositions were analyzed and evaluated in the same manner as in Example 11. The results are shown in Table 9 together with the results of Example 11.

Table 9

| | | | Example 25 | Example 26 | Example 11 | Example 27 |
|---|---|---|---|---|---|---|
| Formulation | Plant extract II | mass% | 50.7 | 50.7 | 50.7 | 50.7 |
| | HPMC | mass% | 1.0 | 1.0 | 1.0 | 1.0 |
| | Maltitol | mass% | 10.0 | 21.1 | 26.4 | 31.7 |
| | Dextrin | mass% | 13.3 | 13.3 | 13.3 | 13.3 |
| | Taste masking agent (balance) | mass% | 25.0 | 13.9 | 8.6 | 3.3 |
| | Total | mass% | 100 | 100 | 100 | 100 |
| Analysis or calculation | (A) Plant extract | mass%[*1] | 48.7 | 48.7 | 48.7 | 48.7 |
| | (B) Dextrin | mass%[*1] | 13.3 | 13.3 | 13.3 | 13.3 |
| | (C) Sugar alcohol | mass%[*1] | 10.0 | 21.1 | 26.4 | 31.7 |
| | (D) Cellulose derivative | mass%[*1] | 1.0 | 1.0 | 1.0 | 1.0 |
| | Mass ratio {(B)+(C)}/(A) | - | 0.5 | 0.7 | 0.8 | 0.9 |
| | Mass ratio [(C)/(A)] | - | 0.21 | 0.43 | 0.54 | 0.65 |
| | Mass ratio [(C)/(D)] | - | 10.0 | 21.1 | 26.4 | 31.7 |
| Evaluation | Granulation | - | Acceptable | Acceptable | Acceptable | Acceptable |
| | Granulation load | [A] | 2.7 | 2.7 | 2.7 | 2.7 |
| | Median diameter | [mm] | 0.59 | 0.62 | 0.62 | 0.6 |
| | Yield | [%] | 88.5 | 89.9 | 88.6 | 87.7 |
| | 90% dissolution time | [sec] | 10 | 10 | 10 | 10 |
| *1 Solids with respect to the granular composition | | | | | | |

Examples 28 and 29

Granular compositions were obtained by the same operations as in Example 2 except that HPC or MC was used in place of HPMC. Then, the resultant granular compositions were analyzed and evaluated in the same manner as in Example 2. The results are shown in Table 10 together with the results of Examples 1 and 2.

Table 10

|  |  |  | Example 2 | Example 28 | Example 29[*2] |
|---|---|---|---|---|---|
|  | Plant extract II | mass% | 50.7 | 50.7 | 50.7 |
|  | HPMC | mass% | 2.0 | - | - |
|  | HPC |  | - | 2.0 | - |
|  | MC |  | - | - | 2.0 |
|  | Maltitol | mass% | 26.4 | 26.4 | 26.4 |
|  | Dextrin | mass% | 13.3 | 13.3 | 13.3 |
|  | Taste masking agent (balance) | mass% | 7.6 | 7.6 | 7.6 |
|  | Total | mass% | 100 | 100 | 100 |
| Analysis or calculat ion | (A) Plant extract | mass%[*1] | 48.7 | 48.7 | 48.7 |
|  | (B) Dextrin | mass%[*1] | 13.3 | 13.3 | 13.3 |
|  | (C) Sugar alcohol | mass%[*1] | 26.4 | 26.4 | 26.4 |
|  | (D) Cellulose derivative | mass%[*1] | 2.0 | 2.0 | 0.0 |
|  | Mass ratio {(B)+(C)}/(A) | - | 0.8 | 0.8 | 0.8 |
|  | Mass ratio [(C)/(A)] | - | 0.54 | 0.54 | 0.54 |
|  | Mass ratio [(C)/(D)] | - | 13.2 | 13.2 | - |
| Evaluat ion | Granulation | - | Acceptable | Acceptable | Acceptable |
|  | Granulation load | [A] | 3 | 3 | 2.8 |
|  | Median diameter | [mm] | 0.74 | 0.71 | 0.63 |
|  | Yield | [%] | 94.6 | 88.6 | 77.9 |
|  | 90% dissolution time | [sec] | 14 | 16 | 18 |

*1 Solids with respect to the granular composition
*2 Reference Example

Example 30

A granular composition was obtained by the same operations as in Example 2 except that the powdered plant extract III was used in place of the powdered plant extract II. Then, the resultant granular composition was analyzed and evaluated in the same manner as in Example 2. The results are shown in Table 11 together with the results of Examples 1 and 2.

Table 11

|  |  |  | Example 1 | Example 2 | Example 30 |
|---|---|---|---|---|---|
| Formulati on | Plant extract I | mass% | 50.7 | - | - |
|  | Plant extract II | mass% | - | 50.7 |  |
|  | Plant extract III | mass% | - | - | 50.7 |
|  | HPMC | mass% | 2.0 | 2.0 | 2.0 |
|  | Maltitol | mass% | 26.4 | 26.4 | 26.4 |
|  | Dextrin | mass% | 13.3 | 13.3 | 13.3 |
|  | Taste masking agent (balance) | mass% | 7.6 | 7.6 | 7.6 |
|  | Total | mass% | 100 | 100 | 100 |

(continued)

|  |  |  | Example 1 | Example 2 | Example 30 |
|---|---|---|---|---|---|
| Analysis or calculatio n | (A) Plant extract | mass%[*1] | 48.4 | 48.7 | 50.7 |
|  | (B) Dextrin | mass%[*1] | 13.3 | 13.3 | 13.3 |
|  | (C) Sugar alcohol | mass%[*1] | 26.4 | 26.4 | 26.4 |
|  | (D) Cellulose derivative | mass%[*1] | 2.0 | 2.0 | 2.0 |
|  | Mass ratio {(B)+(C)}/(A) | - | 0.8 | 0.8 | 0.8 |
|  | Mass ratio [(C)/(A)] | - | 0.55 | 0.54 | 0.52 |
|  | Mass ratio [(C)/(D)] | - | 13.2 | 13.2 | 13.2 |
| Evaluatio n | Granulation | - | Acceptable | Acceptable | Acceptable |
|  | Granulation load | [A] | 2.7 | 3 | 2.7 |
|  | Median diameter | [mm] | 0.76 | 0.74 | 0.72 |
|  | Yield | [%] | 93.0 | 94.6 | 88.2 |
|  | 90% dissolution time | [sec] | 12 | 14 | 12 |
| *1 Solids with respect to the granular composition | | | | | |

It found from Tables 2 to 11 that a granular composition that can be granulated despite containing a plant extract at a high concentration, and is also capable of instantly dissolving in the mouth, is obtained by incorporating dextrin, a sugar alcohol, and one or more of a cellulose derivative selected from the group consisting of hydroxypropyl methylcellulose and hydroxypropyl cellulose and salts thereof into the plant extract. In addition, it found from Table 8 that, when CMC is blended in addition to HPMC, the solubility of the granules can be further improved.

## Claims

1. A granular composition, comprising the following components (A), (B), (C), and (D):

    (A) 20 mass% to 70 mass% of a plant extract;
    (B) 3 mass% or more of dextrin;
    (C) 5 mass% or more of a sugar alcohol; and
    (D) from 0.2 mass% to 5 mass% of one or more of a cellulose derivative selected from the group consisting of hydroxypropyl methylcellulose and hydroxypropyl cellulose and salts thereof.

2. The granular composition according to claim 1, wherein a mass ratio of a total of the component (B) and the component (C) to the component (A), [[(B)+(C)]/(A)], is from 0.3 to 3.2.

3. The granular composition according to claim 1 or 2, wherein the component (C) is maltitol.

4. The granular composition according to any one of claims 1 to 3, wherein the component (D) comprises carboxymethyl cellulose.

5. A method for producing a granular composition, comprising the following steps (1) to (4):

    (1) a step of mixing the following components (A), (B), (C), and (D):

        (A) 20 mass% to 70 mass% of a plant extract;
        (B) 3 mass% or more of dextrin;
        (C) 5 mass% or more of a sugar alcohol; and
        (D) from 0.2 mass% to 5 mass% of one or more of a cellulose derivative selected from the group consisting of hydroxypropyl methylcellulose and hydroxypropyl cellulose and salts thereof;

(2) a step of adding an aqueous medium to the mixture after the step (1), followed by kneading;
(3) a step of granulating the kneaded product after the step (2); and
(4) a step of drying the granulated product after the step (3) to obtain a granular composition.

**6.** The granular composition according to any one of claims 1 to 4, wherein a content of the component (A) is from 30 mass% to 65 mass%.

**7.** The granular composition according to any one of claims 1 to 4 and 6, wherein the plant extract is an extract of coffee bean, tea or rosemary.

**8.** The granular composition according to any one of claims 1 to 4, 6 and 7, wherein a mass ratio of the component (A) and the component (C), [(C)/(A)], is from 0.15 to 2.

**9.** The granular composition according to any one of claims 1 to 4 and 6 to 8, wherein a mass ratio of the component (C) and the component (D), [(C)/(D)], is from 3 to 60.


**Patentansprüche**

**1.** Granuläre Zusammensetzung, umfassend die folgenden Komponenten (A), (B), (C) und (D):

(A) 20 Massen-% bis 70 Massen-% eines Pflanzenextrakts;
(B) 3 Massen-% oder mehr Dextrin;
(C) 5 Massen-% oder mehr eines Zuckeralkohols; und
(D) 0,2 Massen-% bis 5 Massen-% eines oder mehrerer von einem Cellulosederivat, ausgewählt aus der Gruppe, bestehend aus Hydroxypropylmethylcellulose und Hydroxypropylcellulose, und Salzen davon.

**2.** Granuläre Zusammensetzung gemäß Anspruch 1, wobei ein Massenverhältnis von einer Gesamtmenge der Komponente (B) und der Komponente (C) zu der Komponente (A), [[(B)+(C)]/(A)], 0,3 bis 3,2 beträgt.

**3.** Granuläre Zusammensetzung gemäß Anspruch 1 oder 2, wobei die Komponente (C) Maltit ist.

**4.** Granuläre Zusammensetzung gemäß einem der Ansprüche 1 bis 3, wobei die Komponente (D) Carboxymethylcellulose umfasst.

**5.** Verfahren zur Herstellung einer granulären Zusammensetzung, umfassend die folgenden Schritte (1) bis (4):

(1) einen Schritt des Mischens der folgenden Komponenten (A), (B), (C) und (D):

(A) 20 Massen-% bis 70 Massen-% eines Pflanzenextrakts;
(B) 3 Massen-% oder mehr Dextrin;
(C) 5 Massen-% oder mehr eines Zuckeralkohols; und
(D) 0,2 Massen-% bis 5 Massen-% eines oder mehrerer von einem Cellulosederivat, ausgewählt aus der Gruppe, bestehend aus Hydroxypropylmethylcellulose und Hydroxypropylcellulose, und Salzen davon;

(2) einen Schritt des Hinzufügens eines wässrigen Mediums zu der Mischung nach dem Schritt (1), gefolgt von Kneten;
(3) einen Schritt des Granulierens des gekneteten Produkts nach dem Schritt (2); und
(4) einen Schritt des Trocknens des granulierten Produkts nach dem Schritt (3), um eine granuläre Zusammensetzung zu erhalten.

**6.** Granuläre Zusammensetzung gemäß einem der Ansprüche 1 bis 4, wobei ein Gehalt der Komponente (A) 30 Massen-% bis 65 Massen-% beträgt.

**7.** Granuläre Zusammensetzung gemäß einem der Ansprüche 1 bis 4 und 6, wobei der Pflanzenextrakt ein Extrakt aus Kaffeebohne, Tee oder Rosmarin ist.

**8.** Granuläre Zusammensetzung gemäß einem der Ansprüche 1 bis 4, 6 und 7, wobei ein Massenverhältnis von der Komponente (A) und der Komponente (C), [(C)/(A)], 0,15 bis 2 beträgt.

9. Granuläre Zusammensetzung gemäß einem der Ansprüche 1 bis 4 und 6 bis 8, wobei ein Massenverhältnis von der Komponente (C) und der Komponente (D), [(C)/(D)], 3 bis 60 beträgt.

**Revendications**

1. Composition granulaire, comprenant les composants (A), (B), (C) et (D) suivants :

   (A) 20 % en masse à 70 % en masse d'un extrait de plante ;
   (B) 3 % en masse ou plus de dextrine ;
   (C) 5 % en masse ou plus d'un alcool de sucre ; et
   (D) de 0,2 % en masse à 5 % en masse d'un ou plusieurs dérivés de cellulose choisis dans le groupe consistant en hydroxypropylméthylcellulose et hydroxypropylcellulose et leurs sels.

2. Composition granulaire selon la revendication 1, dans laquelle un rapport massique entre un total du composant (B) et du composant (C) et le composant (A), [[(B)+(C)]/(A)], est de 0,3 à 3,2.

3. Composition granulaire selon la revendication 1 ou la revendication 2, dans laquelle le composant (C) est le maltitol.

4. Composition granulaire selon l'une quelconque des revendications 1 à 3, dans laquelle le composant (D) comprend de la carboxyméthylcellulose.

5. Procédé de production d'une composition granulaire, comprenant les étapes (1) à (4) suivantes :

   (1) une étape de mélange des composants (A), (B), (C) et (D) suivants :

   (A) 20 % en masse à 70 % en masse d'un extrait de plante ;
   (B) 3 % en masse ou plus de dextrine ;
   (C) 5 % en masse ou plus d'un alcool de sucre ; et
   (D) de 0,2 % en masse à 5 % en masse d'un ou plusieurs dérivés de cellulose choisis dans le groupe consistant en hydroxypropylméthylcellulose et hydroxypropylcellulose et leurs sels ;

   (2) une étape d'ajout d'un milieu aqueux au mélange après l'étape (1), suivie d'un malaxage ;
   (3) une étape de granulation du produit malaxé après l'étape (2) ; et
   (4) une étape de séchage du produit granulé après l'étape (3) pour obtenir une composition granulaire.

6. Composition granulaire selon l'une quelconque des revendications 1 à 4, dans laquelle la teneur en composant (A) est de 30 % en masse à 65 % en masse.

7. Composition granulaire selon l'une quelconque des revendications 1 à 4 et 6, dans laquelle l'extrait de plante est un extrait de grain de café, de thé ou de romarin.

8. Composition granulaire selon l'une quelconque des revendications 1 à 4, 6 et 7, dans laquelle un rapport massique entre le composant (A) et le composant (C), [(C)/(A)], est de 0,15 à 2.

9. Composition granulaire selon l'une quelconque des revendications 1 à 4 et 6 à 8, dans laquelle un rapport massique entre le composant (C) et le composant (D), [(C)/(D)], est de 3 à 60.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017178830 A
- JP 2018061483 A